# EUROPÄISCHE PATENTANMELDUNG

(11) **EP 3 480 234 A1**
(43) Veröffentlichungstag der Anmeldung: **08.05.2019**
(21) Anmeldenummer: 17199877.6
(22) Anmeldetag: 03.11.2017
(51) Int. Cl.: C08G 18/69, C08G 18/71, C09J 175/06, C09D 175/06

(54) **BLOCK-COPOLYMERE, ENTHALTEND POLYESTER- UND POLYOLEFIN-STRUKTUREINHEITEN, UND DEREN VERWENDUNG**

(71) Anmelder: Evonik Degussa GmbH, 45128 Essen (DE)
(72) Erfinder: KOLB, Nicloai, 45657 Recklinghausen (DE); BRENNER, Gabriele, 48249 Dülmen (DE)

(57) **Zusammenfassung**

Die vorliegende Erfindung betrifft ein Polymer enthaltend eine oder mehrere Polyester- und eine oder mehreren Polyolefin-Struktureinheiten, welches sich dadurch auszeichnet, dass es mindestens eine Struktureinheit der Formel (I) 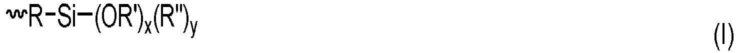 aufweist, mit R, R' und R" gleiche oder verschiedene, gesättigte Kohlenwasserstoffreste, vorzugsweise lineare Kohlenwasserstoffreste, bevorzugt mit 1 bis 3 Kohlenstoffatomen, und x = 0 bis 3, y = 0 bis 3, mit der Maßgabe, dass x + y = 3 ist, und wobei die geschwungene Linie eine kovalenten Bindung zum Polymer darstellt, ein Verfahren zur Herstellung eines Silan-funktionalisierten Polymers, bei dem das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8 OH-Gruppen aufweist, direkt oder nach einem Zwischenschritt mit mindestens einer organischen Silanverbindung umgesetzt wird sowie die Verwendung des Polymers oder des mit dem Verfahren hergestellten Silan-funktionalisierten Polymers zur Herstellung von Klebstoffen, Dichtstoffen oder Beschichtungen und die Verwendung dieser Kleb- und Dichtstoffe zu Verklebung von Substraten sowie die Verwendung der Beschichtungszusammensetzungen zur Beschichtung von Substraten.

## Beschreibung

Die vorliegende Erfindung betrifft ein Polymer enthaltend eine oder mehrere Polyester- und eine oder mehreren Polyolefin-Struktureinheiten, welches sich dadurch auszeichnet, dass es mindestens eine Struktureinheit der Formel (I) 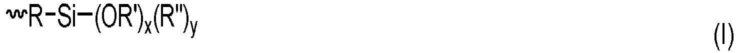 aufweist, mit R, R' und R" gleiche oder verschiedene, gesättigte Kohlenwasserstoffreste, vorzugsweise lineare Kohlenwasserstoffreste, bevorzugt mit 1 bis 3 Kohlenstoffatomen, und x = 0 bis 3, y = 0 bis 3, mit der Maßgabe, dass x + y = 3 ist, und wobei die geschwungene Linie eine kovalenten Bindung zum Polymer darstellt, ein Verfahren zur Herstellung eines Silan-funktionalisierten Polymers, bei dem das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8 OH-Gruppen aufweist, direkt oder nach einem Zwischenschritt mit mindestens einer organischen Silanverbindung umgesetzt wird sowie die Verwendung des Polymers oder des mit dem Verfahren hergestellten Silan-funktionalisierten Polymers zur Herstellung von Klebstoffen, Dichtstoffen oder Beschichtungen und die Verwendung dieser Kleb- und Dichtstoffe zur Verklebung von Substraten sowie die Verwendung der Beschichtungszusammensetzungen zur Beschichtung von Substraten.

Silan-funktionalisierte Polymere (SFP) sind bekannt und werden heute vielfach als reaktive Kleb-, Dicht- oder Beschichtungsstoffe verwendet. Als reaktive Silangruppen werden dabei üblicherweise Alkoxysilane verwendet, insbesondere Dimethoxy-, Trimethoxy-, Diethoxy- oder Triethoxy-Silane. Diese Alkoxysilane kondensieren mit Feuchtigkeit und optional einem entsprechenden Katalysator unter Abspaltung der Alkohole zu einem vernetzten System, welches anschließend nicht mehr oder nur sehr schwer aufgeschmolzen werden kann. Im Gegensatz zu den ebenfalls häufig verwendeten reaktiven Systemen basierend auf Polyisocyanaten haben die SFPs den Vorteil, dass kein toxisches freies Isocyanat vorhanden ist.

Für die Herstellung von SFPs ist eine Vielzahl von möglichen Reaktionen denkbar und beschrieben, so unter anderem das Verknüpfen von OH-funktionellen Polymeren (sog. Polyole) mit einem Organosilan über Di- oder Polyisocyanate. So beschreibt die WO2007037915 eine Umsetzung von Polyether-Polyolen mit einem Überschuss Diisocyanat zur Herstellung von NCO-terminierten Pre-Polymeren, welche anschließend mit einem Aminosilan zu dem SFP reagieren.

Die Anmeldungen WO2007037824 sowie WO2016180649 beschreiben dagegen einen einstufigen Prozess, in dem ein Polyol mit einem Isocyanat-funktionellem Silan umgesetzt wird. Dieser Prozess kann vorteilhaft sein, da hier ein klar definiertes Produkt erhalten wird, während bei dem Umsatz von Polyolen mit Di- oder Polyisocyanaten auch Polyol-Oligomere erhalten werden können, welche die Viskosität stark erhöhen.

Beim Verkleben von stark unpolaren Substraten oder dem Abdichten von Substraten, wo der Dichtstoff eine Barrierefunktion gegen Sauerstoff oder Luftfeuchtigkeit übernehmen soll, werden häufig Polyolefine als Polyole eingesetzt. Ebenfalls finden Polyolefine als Polyole in Kleb- oder Dichtstoffen eine Anwendung, wo eine hohe Elastizität und Flexibilität, insbesondere bei tiefen Temperaturen, benötigt wird. Darüber hinaus finden Polyolefine in Beschichtungen eine Anwendung, wo beispielsweise eine hohe Hydrophobie benötigt wird, beispielsweise zur verbesserten Hydrolysestabilität einer Beschichtung.

Ein Nachteil in der Verwendung von Polyolefinen als Polyole in Kleb- oder Dichtstoffen sowie Beschichtungen ist jedoch, dass Polyolefine häufig über eine sehr geringe Kohäsion verfügen und insbesondere auf polaren Substraten wie Metallen eine vergleichsweise geringe Klebkraft aufweisen.

Aufgabe der vorliegenden Erfindung war daher die Bereitstellung eines SFP, welches einen oder mehrere der Nachteile der SFP aus dem Stand der Technik nicht aufweist.

Überraschenderweise wurde gefunden, dass diese Aufgabe gelöst werden kann, wenn das Polymer, welches eine Silan-Gruppe aufweist, eine oder mehrere Polyester- und eine oder mehrere Polyolefin-Struktureinheiten aufweist.

Gegenstand der vorliegenden Erfindung sind deshalb die nachfolgend beschriebenen und in den Ansprüchen beanspruchten Polymere.

Ebenfalls Gegenstand der vorliegenden Erfindung ist ein Verfahren zur Herstellung eines Silan-funktionalisierten Polymers, bei dem das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8, vorzugsweise mindestens zwei OH-Gruppen aufweist, direkt oder nach einem Zwischenschritt mit mindestens einer organischen Silanverbindung umgesetzt wird.

Außerdem Gegenstand der vorliegenden Erfindung ist die Verwendung des Polymers oder des mit dem Verfahren hergestellten Silan-funktionalisierten Polymers zur Herstellung von oder als Klebstoffe(n), Dichtstoffe(n) oder Beschichtung(en) sowie die Verwendung dieser Kleb- und Dichtstoffe zur Verklebung von Substraten sowie die Verwendung der Beschichtungszusammensetzungen zur Beschichtung von Substraten.

Die erfindungsgemäß hergestellten Polymere bzw. die erfindungsgemäß erhaltenen SFP haben den Vorteil, dass sie nach dem Aushärten eine gegenüber reinen Polyolefin-basierten SFP eine verbesserte Kohäsion aufweisen. Bevorzugt weisen sie eine gute Klebkraft auf polaren Oberflächen, wie z. B. Metallen auf und verfügen vorzugsweise auch über eine gute Flexibilität und Elastizität.

Die Vorteile der Herstellung von SFPs über das Verknüpfen von Isocyanaten mit Organosilanen liegt darin, dass die Silangruppen ausschließlich an den OH-Gruppen der Polyole eingebaut werden und die entsprechenden Produkte daher in ihrer Funktionalität klar definiert sind. Ebenfalls erfolgt der Einbau mittels Isocyanaten üblicherweise quantitativ, sodass keine flüchtigen Bestandteile oder Isocyanatreste vorhanden sind.

Ein weiterer Vorteil der Herstellung von SFPs durch die Umsetzung von Polyolen mit Organosilanen über Isocyanaten ist, dass die Auswahl der Polyole sich nach den Anwendungsanforderungen richten kann.

Die erfindungsgemäßen SFP weisen außerdem den Vorteil auf, dass die unterschiedlichen Systeme - Polyolefin und Polyester - durch die kovalente Anbindung im Block-Copolymer miteinander kompatibel gemacht werden. Eine Abmischung von SFP enthaltend ein Polyesterbasiertes SFP und ein Polyolefin-basiertes SFP ohne kovalente Bindung zwischen den beiden SFP könnte sich bei Lagerung entmischen und ein inhomogenes System ergeben.

Darüber hinaus weisen die erfindungsgemäßen SFP den Vorteil auf, dass sie als Kompatibilitätsvermittler fungieren. So können weitere SFP, beispielsweise Polyester-, Polyether- oder Polyolefin-basierte SFP gemeinsam mit den erfindungsgemäßen SFP in einer Formulierung verwendet werden, ohne dass eine Entmischung stattfindet.

Die erfindungsgemäßen Polymere und das erfindungsgemäße Verfahren sowie die erfindungsgemäße Verwendung der Polymere bzw. SFP werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Die erfindungsgemäßen Polymere enthaltend eine oder mehrere Polyester- und eine oder mehrere Polyolefin-Struktureinheiten, zeichnen sich dadurch aus, dass das Polymer mindestens eine Struktureinheit der Formel (I) 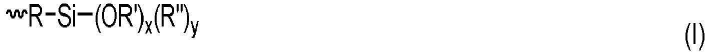 aufweist, mit R, R' und R" gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x = 0 bis 3, y = 0 bis 3, mit der Maßgabe, dass x + y = 3 ist, und wobei die geschwungene Linie eine kovalenten Bindung zum Polymer darstellt. Bevorzugt ist x >= 2 und y <= 1, besonders bevorzugt ist x = 3 undy=0.

Das erfindungsgemäße Polymer ist vorzugsweise ein Silan-funktionalisiertes Polymer (SFP). Die erfindungsgemäßen Polymere, insbesondere die SFP, weisen vorzugsweise ein zahlenmittleres Molekulargewicht von mindestens 1000 g/mol, bevorzugt von 1500 bis 15000 g/mol, besonders bevorzugt von 2000 bis 10000 g/mol auf.

Das erfindungsgemäße Polymer genügt vorzugsweise der Formel (II) 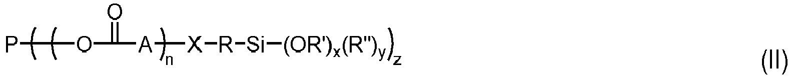 mit
P = Polyolefinstruktureinheit,
A = gleiche oder verschiedene Kohlenwasserstoffreste, bevorzugt -C₅H₁₀- und/oder - C(CH₃)H-Rest,
X = Linker, der mindestens eine -N-C(O)-O- Gruppe aufweist,
z >= 1, vorzugsweise >= 1,8, bevorzugt >=2 bis 10, besonders bevorzugt >= 2 bis 3.
   und
n von 2 bis 500, vorzugsweise 3 bis 90 und bevorzugt 4 bis 50 ist.

Die Linker X weisen vorzugsweise gleiche oder verschiedene Strukturen entsprechend Formel (IIa), (IIb), (IIc), (IId) und/oder (IIe) auf, 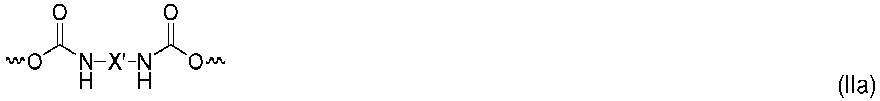 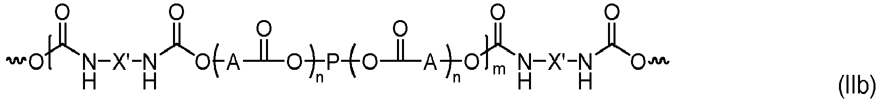 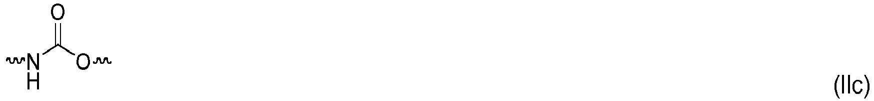 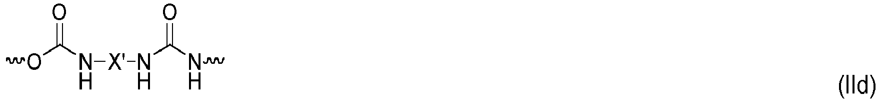 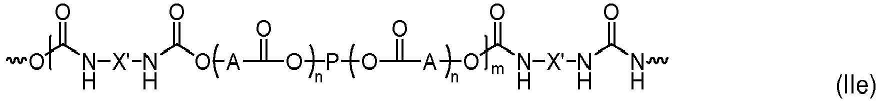 mit X' = Kohlenwasserstoffrest, vorzugsweise 1,1,3,3-tetramethylcyclohexanrest, Toluolrest oder Methylen-1,1'-Dibenzolrest und A und n wie oben definiert, m = 1 bis 10, und wobei die geschwungenen Linien eine kovalenten Bindung zu den benachbarten Atomen darstellen. Vorzugsweise weisen die erfindungsgemäßen Polymere Linker X der Formeln (IIc) oder (IId) und (IIe) oder (IIa) und (IIb) auf, besonders bevorzugt (IIc).

Vorzugsweise basiert in dem erfindungsgemäßen Polymer mindestens eine Polyolefinstruktureinheit auf einem OH-funktionellen Polyolefin, bevorzugt auf einem OH-funktionellen Polybutadien.

In dem erfindungsgemäßen Polymer basiert mindestens eine Polyesterstruktureinheit auf einem zyklischen Ester, bevorzugt auf ε-Caprolacton, besonders bevorzugt ausschließlich auf ε-Caprolacton. Besonders bevorzugt basiert mindestens eine Polyesterstruktureinheit auf ε-Caprolacton und Lactid, ganz besonders bevorzugt ausschließlich auf ε-Caprolacton und Lactid.

In besonders bevorzugten erfindungsgemäßen Polymeren basiert mindestens eine Polyolefinstruktureinheit auf einem OH-funktionellen Polyolefin, bevorzugt auf einem OH-funktionellen Polybutadien und mindestens eine Polyesterstruktureinheit auf ε-Caprolacton, bevorzugt auf ε-Caprolacton und Lactid.

Der Rest R ist in dem erfindungsmäßen Polymer vorzugsweise ein linearer Kohlenwasserstoffrest -CₖH₂ₖ- mit k = 1 bis 3, bevorzugt k = 1 oder 3, besonders bevorzugt k = 3. Ein Wert von k = 1 kann vorteilhaft für eine hohe Reaktivität des SFP gegenüber Feuchtigkeit zur schnelleren Aushärtung bzw. der Vermeidung eines Aushärtungskatalysators sein.

Das erfindungsgemäße Polymer basiert vorzugsweise auf einem Block-Copolymer auf Basis von OH-funktionellem Polyolefin, welches auch anteilig oder vollständig hydriert vorliegen kann, vorzugsweise aber unhydriert ist, bevorzugt OH-funktionellem Polybutadien und zyklischen Estern als Polyol, welches mindestens 1,8, vorzugsweise mindestens zwei OH-Gruppen aufweist.

Als OH-funktionalisierte Polyolefine gelten im Rahmen der vorliegenden Erfindung jene OH- oder COOH-funktionalisierte Polymere, die auf Alkenen und/oder Polyenen als Monomere basieren. Im Rahmen der vorliegenden Erfindung bestehen die Wiederholungseinheiten der Polyolefine vorzugsweise ausschließlich aus den Elementen Kohlenstoff und Wasserstoff und weisen bevorzugt keine aromatischen Strukturen auf. Die Polyolefine können dabei einen beliebigen Anteil an Doppelbindungen enthalten.

Vorzugsweise handelt es sich bei den eingesetzten Block-Copolymeren auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, um B(A)_{w}-Blocksysteme, mit A = Polyester, mit B = OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und mit w ≥ 1,8, vorzugsweise w ≥ 2 bis 5, bevorzugt w > 2 bis 3. Der Wert für w spiegelt die Funktionalität des OH-funktionalisierten, bevorzugt terminierten, Polyolefin wieder. In der Regel liegt die Funktionalität der OH-funktionalisierten, bevorzugt terminierten, Polyolefin, und damit w im Bereich von 1,8 bis 5, vorzugsweise im Bereich von 2 bis 3,5, insbesondere bevorzugt im Bereich von 2 bis 3. Im Falle von w = 2, also bei OH-funktionalisierten, bevorzugt terminierten, Polyolefinen mit einer Funktionalität von 2, handelt es sich bei den Block-Copolymeren insbesondere um ABA-Triblocksysteme. Weiterhin sind ebenfalls Block-Strukturen der Formel (AB)ₘ möglich, wobei m > 1 ist.

Detaillierter lassen sich die Block-Copolymere auf Basis von OH-funktionellem, vorzugsweise OH-terminiertem Polyolefin, welches auch anteilig oder vollständig hydriert vorliegen kann, vorzugsweise aber unhydriert ist, bevorzugt OH-funktionellem, vorzugsweise OH-terminiertem Polybutadien, welches auch anteilig oder vollständig hydriert vorliegen kann, vorzugsweise aber unhydriert ist, und zyklischen Estern als B'(YA'-Z)_{w}-Systeme beschreiben, mit A' = Polyesterrest, B' = Polyolefinrest, Y =COO -Gruppen, Z = OH-Endgruppen und w wie oben definiert.

Der Polyolefinrest B' ist vorzugsweise ein Polybutadienrest aufweisend die oder bevorzugt bestehend aus den von 1,3-Butadien abgeleiteten Monomereinheiten 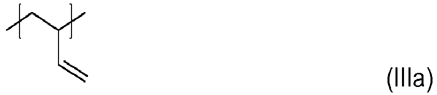 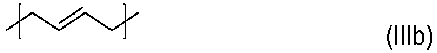 und 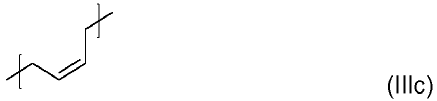 mit der Maßgabe, dass die Monomereinheiten (IIIa), (IIIb) und (IIIc) blockweise oder statistisch verteilt angeordnet sein können und bezogen auf das Polybutadien der prozentuale Anteil der Wiederholungseinheit (IIIa) = 10 bis 40 Molprozent, vorzugsweise 15 bis 30 Molprozent und bevorzugt 20 bis 25 Molprozent beträgt, bezogen auf die Wiederholungseinheit (IIIb) = 40 bis 85 Molprozent, vorzugsweise 50 bis 70 Molprozent und bevorzugt 55 bis 60 Molprozent beträgt und der Anteil der Wiederholungseinheit (IIIc) 5 bis 40 Molprozent, vorzugsweise 15 bis 30 Molprozent und bevorzugt 15 bis 25 Molprozent beträgt. Vorzugsweise weist der Polybutadienrest zu einem Anteil von bis zu 5 Molprozent, bevorzugt von 0,01 bis 4 Mol-% eine oder mehrere verzweigende Struktur/en 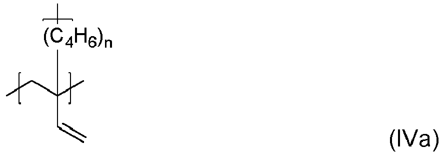 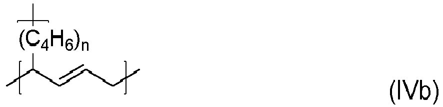 und/oder 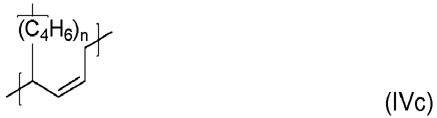 auf, wobei "(C₄H₆)ₙ" einer Butadien-Oligomer enthaltend oder bestehend aus den Wiederholungseinheiten (IIIa), (IIIb) und (IIIc) entspricht, w ≥ 1,8, vorzugsweise w ≥ 2, bevorzugt w > 2 und einem Gewichts-Verhältnis der Strukturen A' zu B' von 1:19 zu 19:1.

Das erfindungsgemäße Verfahren zur Herstellung eines Silan-funktionalisierten Polymers zeichnet sich dadurch aus, dass das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8, vorzugsweise mindestens zwei OH-Gruppen aufweist, direkt oder nach einem Zwischenschritt mit mindestens einer organischen Silanverbindung umgesetzt wird. Als Silanverbindung wird vorzugsweise ein Isocyanat-funktionelles Silan eingesetzt wird. Erfolgt die Umsetzung nach einem Zwischenschritt, wird vorzugsweise das Polyol mit einem Polyisocyanat, vorzugsweise Diisocyanat umgesetzt (zu einem Pre-Polymer), welches anschließend mit einem Aminosilan oder Hydroxyalkylsilan umgesetzt wird. Beide Reaktionswege sind grundsätzlich aus dem Stand der Technik bekannt.

Als Diisocyanatverbindung werden vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat eingesetzt.

Zur Umsetzung des Pre-Polymers vorzugsweise verwendete Aminosilane sind beispielsweise Aminopropyltriethoxysilan, Aminopropyltrimethoxysilan, Aminobutyltriethoxysilan, N-(2-aminoethyl-3-aminopropyl)triethoxysilan, Aminopropylmethyldiethoxysilan, Aminopropylmethyldimethoxysilan, N-(2-Aminoethyl)-3-aminopropyltrimethoxysilan, N-(2-Aminoethyl)-3-aminopropyltrimethoxysilan, N-Cyclohexyl-3-aminopropyltrimethoxysilan, N-Cyclohexylaminomethyltriethoxysilan sowie 3-(2-Aminomethylamino)-propyltriethoxysilan. Als Hydroxysilan bzw. Hydroxyalkylsilan kann vorzugsweise 3-(Hydroxypropyl)trimethoxysilan eingesetzt werden.

Als Isocyanat-funktionalisierte Organisilane zur direktem Umsetzung mit dem Polyol werden vorzugsweise 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan oder Isocyanatomethytriisopropoxysilan sowie Mischungen hiervon verwendet.

Die erfindungsgemäßen SFP enthalten vorzugsweise mindestens eine terminale Silan-Gruppe, bevorzugt mindestens zwei terminale Silan-Gruppen. Besonders bevorzugt werden die erfindungsgemäßen SFP über eine stöchiometrische Umsetzung des NCO-terminierten Pre-Polymers mit einem Aminosilan oder Hydroxyalkylsilan oder über eine stöchiometrische Umsetzung des Polyols mit dem Isocyanat-funktionalisiertem Aminosilan erhalten, sodass keine freien OH- und keine freien NCO-Gruppen vorhanden sind.

Die Umsetzung des Polyols mit einem Diisocyanat und/oder dem Isocyanat-funktionalisiertem Organosilan sowie die Umsetzung des Pre-Polymers mit einem Aminosilan oder Hydroxyalkylsilan kann katalysiert erfolgen. Hierfür vorzugsweise eingesetzte Katalysatoren sind beispielsweise Alkoholate und/oder Carboxylate der Metalle Titan, Bismut, Zink, Zinn oder Aluminium.

Die in den erfindungsgemäßen SFP enthaltenen Block-Copolymere werden bevorzugt unter Verwendung einer Titan aufweisenden Verbindung als Katalysator hergestellt. Als Titan aufweisende Verbindung wird vorzugsweise eine organische Titan(IV)-verbindung, bevorzugt Titan(IV)-alkoholat, Titan(IV)-carboxylat oder Titan(IV)-acetylacetonat eingesetzt. Bevorzugt handelt es sich bei der Titan(IV)-verbindung um ein Titan(IV)-alkoholat, wobei es vorteilhaft sein kann, wenn es sich um einen zweizähnigen Liganden in Form eines Diols handelt. Beispiele bevorzugter Titan(IV)-verbindungen sind Titantetramethanolat, Titantetraethanloat, Titantetrapropylat, Titantetraisopropylat, Titantetra-*n*-butylat, Titantetra-*t* butylat, Titantetraphenylat, Titanoxidacetylacetonat, Titanacetylacetonat sowie Titandialkoholate basierend auf Diolen. Vorzugsweise liegt das Titan nicht als Verbindung vor, die einen Amino-gruppen haltigen Ligand aufweist.

Bevorzugt wird die Titan aufweisende Verbindung bereits bei der Herstellung des Block-Copolymers, vorzugsweise als Katalysator, eingesetzt. Der Anteil an Titan in der Reaktionsmischung beträgt vorzugsweise von 0,0001 Gew.-% bis 1 Gew.-%, bevorzugt 0,001 bis 0,1 Gew.-%.

Die Herstellung der Block-Copolymere erfolgt vorzugsweise durch Ringöffnungsreaktion (bzw. -polymerisation), bevorzugt bei Temperaturen von 20 bis 250 °C, vorzugsweise in einem Zeitraum von 0,1 bis 20 Stunden. Die Ringöffnungsreaktion kann vorzugsweise in der Schmelze oder in Anwesenheit von Lösungsmitteln durchgeführt werden.

Vorzugsweise werden in dem Verfahren zur Herstellung der Block-Copolymere als zyklische Ester C₃-Lactone wie β-Propiolacton, C₄-Lactone wie β-Butyrolacton oder γ-Butyrolacton, C₅-Lactone wie 4-Hydroxy-3-pentensäure-gamma-lacton, α-Methylene-γ-butyrolacton, γ-Methylene-γ-butyrolacton, 3-Methyl-2(5H)-furanon, γ-Valerolacton, δ-Valerolacton, C₆-Lactone wie δ-Hexalacton, ε-Caprolacton oder γ-Hexalacton, oder weitere Lactone wie 5-Butyl-4-methyldihydro-2(3H)-furanon, δ-Octanolactone, γ-Phenyl-ε-caprolacton, Oxacyclododecan-2-on, Oxacyclotridecan-2-on, Pentadecanolid, 16-Hexadecanolid, γ-Undecalacton, δ-Undecalacton, γ-Methylene-γ-butyrolacton oder Lactid oder Mischungen daraus, bevorzugt ε-Caprolacton und/oder Lactid, eingesetzt.

In einer besonderen Ausführungsform wird bevorzugt eine Mischung aus ε-Caprolacton und Lactid eingesetzt.

Vorzugsweise wird in dem erfindungsgemäßen Verfahren als zyklischer Ester mindestens ε-Caprolacton und gegebenenfalls Lactid eingesetzt.

Das Hydroxy-funktionelle, vorzugsweise Hydroxy-terminierte Polyolefin, ist vorzugsweise ein Polybutadienrest aufweisend die oder bevorzugt bestehend aus den von 1,3-Butadien abgeleiteten Monomereinheiten 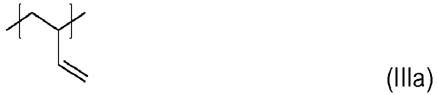 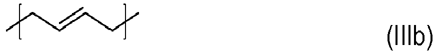 und 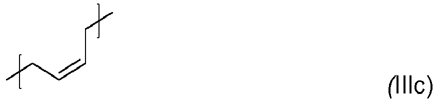 mit der Maßgabe, dass die Monomereinheiten (IIIa), (IIIb) und (IIIc) blockweise oder statistisch verteilt angeordnet sein können und bezogen auf das Polybutadien der prozentuale Anteil der Wiederholungseinheit (IIIa) = 10 bis 40 Molprozent, vorzugsweise 15 bis 30 Molprozent und bevorzugt 20 bis 25 Molprozent beträgt, bezogen auf die Wiederholungseinheit (IIIb) = 40 bis 85 Molprozent, vorzugsweise 50 bis 70 Molprozent und bevorzugt 55 bis 60 Molprozent beträgt und der Anteil der Wiederholungseinheit (IIIc) 5 bis 40 Molprozent, vorzugsweise 15 bis 30 Molprozent und bevorzugt 15 bis 25 Molprozent beträgt. Vorzugsweise weist der Polybutadienrest zu einem Anteil von bis zu 5 Molprozent, bevorzugt von 0,01 bis 4 Mol-% eine oder mehrere verzweigende Struktur/en 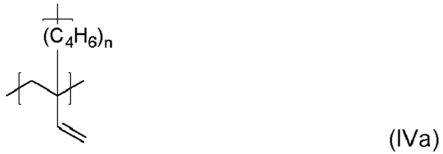 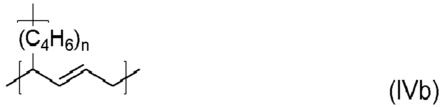 oder/und 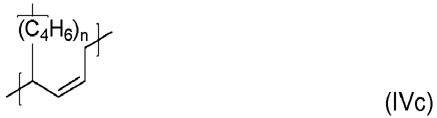 auf, wobei "(C₄H₆)ₙ" einer Butadien-Oligomer enthaltend oder bestehend aus den Wiederholungseinheiten (IIIa), (IIIb) und (IIIc) entspricht.

Bei dem vorab genannten hydroxyterminierten Polybutadien handelt es sich vorzugsweise um ein durch radikalische Polymerisation von 1,3-Butadien erzeugtes Polybutadien mit Hydroxygruppen, jeweils umfassend die im Polybutadien enthaltenen aus 1,3-Butadien abgeleiteten Monomereinheiten (IIIa), (IIIb) und (IIIc), wobei eine eckige Klammer bei der in dieser Anmeldung gewählten formelmäßigen Darstellung der im Polybutadien enthaltenen aus 1,3-Butadien abgeleiteten Monomereinheiten (IIIa), (IIIb) und (IIIc) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Die Monomereinheiten (IIIa), (IIIb) und (IIIc) können dabei in beliebiger Reihenfolge im Polymer angeordnet sein. Bevorzugt ist eine statistische Anordnung.

In einer bevorzugten Ausführungsform beträgt der Anteil von (IIIa), (IIIb) und (IIIc) an der Gesamtheit der im Polybutadien enthaltenen aus 1,3-Butadien abgeleiteten Monomereinheiten jeweils und unabhängig voneinander wenigstens 10 Mol-%.

Insbesondere bevorzugt beträgt der Anteil von (IIIa) an der Gesamtheit der im Polybutadien enthaltenen aus 1,3-Butadien abgeleiteten Monomereinheiten 15 bis 30 Mol-%, der Anteil von (IIIb) an der Gesamtheit der im Polybutadien enthaltenen aus 1,3 Butadien abgeleiteten Monomereinheiten 50 bis 70 Mol-% und der Anteil von (IIIc) an der Gesamtheit der im Polybutadien enthaltenen aus 1,3 Butadien abgeleiteten Monomereinheiten 15 bis 30 Mol-%. Das mittlere Molekulargewicht, bestimmt durch Gelpermeationschromatographie, der hydroxyterminierten Polybutadiene liegt typischerweise zwischen 500 und 10.000 g/mol, bevorzugt zwischen 1.000 und 5.000 g/mol, besonders bevorzugt zwischen 1.500 und 4.000 g/mol.

In einer bevorzugten Ausführungsform können neben den im Polybutadien enthaltenen aus 1,3-Butadien abgeleiteten Monomereinheiten (IIIa), (IIIb) und (IIIc) auch noch andere Monomereinheiten enthalten sein, insbesondere solche, die nicht aus 1,3-Butadien abgeleitet sind. In einer bevorzugten Ausführungsform stellt die Gesamtheit der im Polybutadien enthaltenen aus 1,3-Butadien abgeleiteten Monomereinheiten (IIIa), (IIIb) und (IIIc) jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Vorzugsweise weist der eingesetzte Polybutadienrest zu einem Anteil von bis zu 5 Molprozent, bevorzugt von 0,01 bis 4 Mol-% eine oder mehrere verzweigende Struktur/en 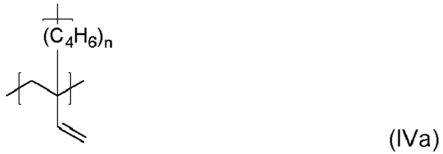 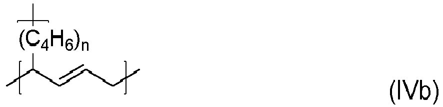 und 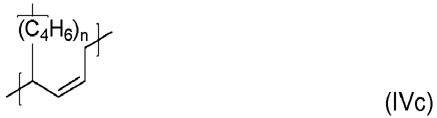 auf, wobei "(C₄H₆)ₙ" einer Butadien-Oligomer enthaltend oder bestehend aus den Wiederholungseinheiten (IIIa), (IIIb) und (IIIc) entspricht.

Darüber hinaus kann das Polybutadien in einer teilweise oder vollständig hydrierten Form vorliegen.

Die eingesetzten hydroxyterminierten Polybutadiene werden vorzugsweise mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST® HT von der Evonik Resource Efficiency GmbH.

Die Funktionalität der eingesetzten OH-funktionellen, vorzugsweise OH-terminierten Polyolefine, bevorzugt Polybutadiene, welche auch anteilig oder vollständig hydriert vorliegen können, vorzugsweise aber unhydriert sind, liegt vorzugsweise im Bereich von 1,8 bis 5, bevorzugt im Bereich von 2 bis 3,5, und insbesondere bevorzugt im Bereich von 2 bis 3.

Es ist möglich, die Funktionalität des OH-funktionellen Polyolefins sowie des erhaltenen Block-Copolymers beispielsweise durch die Reaktion von Monoisocyanaten mit den OH-Gruppen einzustellen.

Wesentlich im Rahmen der vorliegenden Erfindung ist das Vorliegen von OH-Gruppen zur Bildung der Copolymere. Diese OH-Gruppen sind vorzugsweise am Kettenende des Polybutadiens vorhanden, darüber hinaus können in den OH-terminierten Polybutadienen weitere OH-Gruppen entlang der Kette vorliegen. Im Rahmen der vorliegenden Erfindung wird die Funktionalität bestimmt durch die Korrelation von Molekulargewicht zu OHZ.

Mit dem erfindungsgemäßen Verfahren werden vorzugsweise die vorab beschriebenen erfindungsgemäßen Polymere hergestellt.

Die erfindungsgemäßen Polymere (bzw. SFP) oder die nach dem erfindungsgemäßen Verfahren erhältlichen Polymere können als oder zur Herstellung von Klebstoffen, Dichtstoffen oder Beschichtungen verwendet werden.

Erfindungsgemäße Kleb- und Dichtstoffe sowie Beschichtungszusammensetzungen enthaltend erfindungsgemäße Polymere oder solche Polymere die nach dem erfindungsgemäßen Verfahren erhalten werden können zur Verklebung von Substraten, vorzugsweise unpolaren oder metallischen, bevorzugt öligen Substraten, sowie zur Beschichtung von Substraten verwendet werden.

Unter öligen Substraten sind solche Untergründe zu verstehen, die auf der Oberfläche natürliche, synthetische oder mineralische Öle enthalten. Dabei können die öligen Substanzen durch Verarbeitungsschritte auf die Substrate gelangen (z. B. Ziehfette, Wachse, Trennmittel etc.) bzw. in die Substrate gelangen oder sie können aus dem Substrat an die Oberfläche gelangen (z. B. ölhaltige Holzarten wie beispielsweise Teak-Holz oder Meranti-Holz).

Die erfindungsgemäßen Kleb- und Dichtstoffe können neben dem erfindungsgemäßen Polymer weitere Silan-terminierte bzw. Silan-funktionalisierten Polyole enthalten.

Polyole für weitere Silan-funktionalisierte Polymere können z.B. Polyesterpolyole, Polyetherpolyole oder beliebige hydroxyfunktionelle Komponenten sein. Die Wahl dieser optionalen Polyole ist an sich beliebig.

Als optionale weitere Polyesterpolyole können z.B. flüssige oder feste, amorphe oder (teil-)kristalline Polyesterpolyole mit Molekulargewichten mit einem Zahlenmittel zwischen 1000 g/mol und 30000 g/mol, bevorzugt zwischen 2000 g/mol und 10000 g/mol (berechnet aus der Hydroxylzahl) eingesetzt werden, wobei lineare Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und/oder Butandiol-1,4. Das Molekulargewicht (Zahlenmittel) der beigemischten Polyetherpolyole sollte vorzugsweise in einem Bereich von 1000 g/mol bis 10000 g/mol, bevorzugt zwischen 2000 g/mol und 8000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polycarbonate oder hydroxyfunktionelle Polyacrylate eingesetzt.

Die erfindungsgemäßen Kleb- und Dichtstoffe können neben dem erfindungsgemäßen Polymer weitere Silan-funktionalisierte Polymere enthalten, welche nicht durch die Umsetzung eines Polyols mit einem Diisocyanat und anschließender Umsetzung eines Aminosilans oder Hydroxyalkylsilans und/oder der Umsetzung eines Polyols mit einem Isocyanat-funktionalisiertem Silan erhalten wurden. Ein Beispiel für ein solches Silan-funktionalisiertes Polymer ist VESTOPLAST ® 206 (Fa. Evonik Resource Efficiency GmbH).

Die erfindungsgemäßen Kleb- und Dichtstoffe können neben den erfindungsgemäßen Polymeren weitere niedermolekulare Silane enthalten, welche beispielsweise als Vernetzer fungieren oder weitere funktionelle Gruppen einfügen. Beispiele solcher niedermolekularen Silane sind Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)-methyldimethoxysilan, Methacryloxymethyltrimethoxysilan, 3-Methacryloxypropyltriacetoxysilan, N-Methyl[3-(Trimethoxysilyl) propyl]carbamat, N-TrimethoxysilylmethylO-methylcarbamat, N-Dimethoxy(methyl)silylmethyl-O-methylcarbamat, Tris-[3-(trimethoxysilyl) propyl]-isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan oder 1,2-Bis(triethoxysilyl)ethan.

Die erfindungsgemäßen Kleb- und Dichtstoffe können einen Katalysator enthalten, welcher die Reaktion der Silangruppen mit Feuchtigkeit katalysiert, beispielsweise Dibutylzinndilaurat (DBTL).

Die erfindungsgemäßen Kleb- und Dichtstoffe können neben den erfindungsgemäßen Polymeren bis zu 50 Gew.-%, bezogen auf die gesamte Kleb- oder Dichtstoffzusammensetzung, an weiteren Additiven enthalten.

Diese Additive können zum Beispiel sein: nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobilbereich (beispielsweise Kaschierungen von Folien oder Textilien auf Türseitenteilen, Dachhimmel, die Sitzherstellung sowie Retainerverklebungen, Anbauteile im (semi)-strukturellen Bereich, faserverstärkten Verbundwerkstoffen oder/und Metalle), in der Bauindustrie, Schuhindustrie und Textilindustrie (beispielsweise silikonisierte oder hydrophobierte Textilien) sowie im Fensterbau (beispielsweise zur Profilummantelung).

Weiterhin eignen sich die erfindungsgemäßen Kleb- und Dichtstoffe in der Verpackungsindustrie, als Dichtstoffe sowie als Beschichtungsmaterial.

Die erfindungsgemäßen SFP eignen sich sowohl für den Einsatz in einkomponentigen als auch in zweikomponentigen Systemen.

Bei den einkomponentigen Klebstoffen erfolgt die Herstellung der Mischung zeitlich unabhängig vom Klebstoffauftrag, üblicherweise zu einem deutlich früheren Zeitpunkt. Nach dem Auftrag des erfindungsgemäßen Klebstoffs erfolgt die Härtung beispielsweise durch Feuchtigkeit oder thermisch induzierte Reaktion der im Klebstoff enthaltenen Reaktionspartner. Bei den zweikomponentigen Klebstoffen wird die Mischung unmittelbar vor Klebstoffauftrag hergestellt.

In einer besonderen Ausführungsform handelt es sich bei Kleb- und Dichtstoffen um Dual-Cure-Systeme, welche neben der Aushärtung durch Feuchtigkeit auch strahlenhärtend sind. Durch die Wahl geeigneter niedermolekularen Vernetzer, beispielsweise durch das Zufügen von 3-Methacryloxypropyltrimethoxysilan, Methacryloxymethylmethyldimethoxysilan, Methacryloxymethyltrimethoxysilan oder 3-Methacryloxypropyltriacetoxysilan als niedermolekularer, reaktiver Vernetzer, können Systeme erhalten werden, in denen die Silangruppen über Feuchtigkeit vernetzen, die Methacrylgruppen der niedermolekularen Vernetzer hingegen per Strahlenhärtung. Die jeweiligen Vernetzungen können dabei zeitlich unabhängig voneinander erfolgen.

In einer weiteren besonderen Ausführungsform handelt es sich bei erfindungsgemäßen Kleb- und Dichtstoffen um Dual-Cure-Systeme, welche neben der Aushärtung durch Feuchtigkeit über Epoxygruppen und Aminhärter vernetzen. Durch die Wahl geeigneter niedermolekularen Vernetzer, beispielsweise durch das Zufügen von 3-Glycidoxypropyltrimethoxysilan oder 3-Glycidoxypropyltriethoxysilan als niedermolekularer, reaktiver Vernetzer, werden Systeme erhalten, in denen die Silangruppen über Feuchtigkeit vernetzen, die Epoxygruppen der niedermolekularen Vernetzer hingegen per Reaktion mit Aminen und optional weiteren Epoxy-Verbindungen. Die jeweiligen Vernetzungen können dabei zeitlich unabhängig voneinander erfolgen.

Die erfindungsgemäßen Kleb- und Dichtstoffe können durch alle bekannten Methoden appliziert werden, z. B. Extruder, Raupe, Düse, Streichen, Tauchen, Spritzen, Gießen, Walzen, Sprühen, Drucken, Wischen, Waschen, Trommeln, Zentrifugieren, Pulver (elektrostatisch).

Die erfindungsgemäßen Beschichtungszusammensetzungen können zur Beschichtung von Substraten, vorzugsweise unpolaren oder metallischen, bevorzugt öligen Substraten, verwendet werden.

Die erfindungsgemäßen Beschichtungszusammensetzungen können neben dem erfindungsgemäßen Polymer weitere Silan-terminierte bzw. Silan-funktionalisierten Polyole enthalten.

Polyole für weitere Silan-funktionalisierte Polymere können z.B. Polyesterpolyole, Polyetherpolyole oder beliebige hydroxyfunktionelle Komponenten sein. Die Wahl dieser optionalen Polyole ist an sich beliebig.

Als optionale weitere Polyesterpolyole können z.B. flüssige oder feste, amorphe oder (teil-)kristalline Polyesterpolyole mit Molekulargewichten mit einem Zahlenmittel zwischen 1000 g/mol und 30000 g/mol, bevorzugt zwischen 2000 g/mol und 10000 g/mol (berechnet aus der Hydroxylzahl) eingesetzt werden, wobei leicht verzweigte Polyesterpolyole bevorzugt verwendet werden.

Als optionale Polyetherpolyole können z.B. Polyetherdi- oder -triole eingesetzt werden. Beispiele hierfür sind z.B. Homo- und Copolymere aus Ethylenglykol, Propylenglykol und/oder Butandiol-1,4. Das Molekulargewicht (Zahlenmittel) der beigemischten Polyetherpolyole sollte vorzugsweise in einem Bereich von 1000 g/mol bis 10000 g/mol, bevorzugt zwischen 2000 g/mol und 8000 g/mol liegen.

Als optionale beliebige hydroxyfunktionelle Komponenten werden vorzugsweise hydroxyfunktionelle Polyolefine wie hydroxyfunktionelle Polybutadiene, hydroxyfunktionelle Polyisoprene, hydroxyfunktionelle Polycarbonate oder hydroxyfunktionelle Polyacrylate eingesetzt.

Die erfindungsgemäßen Beschichtungszusammensetzungen können neben dem erfindungsgemäßen Polymer weitere Silan-funktionalisierte Polymere enthalten, welche nicht durch die Umsetzung eines Polyols mit einem Diisocyanat und anschließender Umsetzung eines Aminosilans oder Hydroxyalkylsilans und/oder der Umsetzung eines Polyols mit einem Isocyanat-funktionalisiertem Silan erhalten wurden. Ein Beispiel für ein solches Silan-funktionalisiertes Polymer ist VESTOPLAST ® 206 (Fa. Evonik Resource Efficiency GmbH).

Die erfindungsgemäßen Beschichtungszusammensetzungen können neben den erfindungsgemäßen Polymeren weitere niedermolekulare Silane enthalten, welche beispielsweise als Vernetzer fungieren, weitere funktionelle Gruppen einfügen oder als funktionelle Additive, beispielsweise zur Hydrophobierung oder verbesserten Kratzfestigkeit fungieren. Beispiele solcher niedermolekularen Silane sind Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)-methyldimethoxysilan, Methacryloxymethyltrimethoxysilan, 3-Methacryloxypropyltriacetoxysilan, N-Methyl[3-(Trimethoxysilyl) propyl]carbamat, N-TrimethoxysilylmethylO-methylcarbamat, N-Dimethoxy(methyl)silylmethyl-O-methylcarbamat, Tris-[3-(trimethoxysilyl) propyl]-isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan oder 1,2-Bis(triethoxysilyl)ethan.

Die erfindungsgemäßen Beschichtungszusammensetzungen können einen Katalysator enthalten, welcher die Vernetzung der Silangruppen beschleunigt, beispielsweise Dibutylzinndilaurat (DBTL).

Die erfindungsgemäßen Beschichtungszusammensetzungen enthalten bevorzugt mindestens ein Lösungsmittel.

Darüber hinaus können die erfindungsgemäßen Beschichtungszusammensetzungen neben den erfindungsgemäßen Polymeren bis zu 50 Gew.-%, bezogen auf die gesamte Beschichtungszusammensetzung, an weiteren Additiven enthalten.

Diese Additive können zum Beispiel sein: nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel.

Die erfindungsgemäßen Beschichtungszusammensetzungen können durch alle bekannten Methoden appliziert werden. In der einfachsten Ausführungsform erfolgt die Beschichtung direkt auf das Substrat. Hierzu wird insbesondere ein Verfahren verwendet, in dem die erfindungsgemäße Formulierung in organischer Lösung gemeinsam mit weiteren Formulierungsbestandteilen als "Organosol" auf das Substrat aufgetragen und die aufgetragene Schicht anschließend getrocknet wird. Dabei erfolgt die Beschichtung beispielsweise mittels Knife Coating, Roll Coating, Dip Coating, Curtain Coating, Spray Coating. Während des Trocknens erfolgt parallel die Vernetzung der Beschichtung.

In einer besonders bevorzugten, jedoch nicht ausschließlichen, Variante der genannten Beschichtungsvariante der vorliegenden Erfindung werden die erfindungsgemäßen Formulierungen im Rahmen von Bandbeschichtungsprozessen, auch Coil-Coating genannt, eingesetzt. Coil Coating ist ein Verfahren zur ein- oder beidseitigen Beschichtung von flachen beispielsweise Stahl- oder Aluminium-Bändern. Das resultierende Material ist ein Verbundwerkstoff aus einem metallischen Trägermaterial, optional vorbehandelt und/oder mit einem Korrosionsschutzprimer versehen, und einer organischen Beschichtung. Verfahren und Ausführungsformen von Coil-Coating-Prozessen sind dem Fachmann bekannt.

In einer zweiten Ausführungsform wird die Beschichtung in Form einer, mit der erfindungsgemäßen Beschichtungszusammensetzung ausgerüsteten Oberflächenvergütungsfolie auf das jeweilige Substratmaterial realisiert. Hierbei erfolgt zunächst die haftfeste Beschichtung der erfindungsgemäßen Beschichtungszusammensetzung auf ein entsprechendes Folien-Substratmaterial. Die Applikation dieser Oberflächenvergütungsfolie auf das jeweilige Endsubstratmaterial erfolgt anschließend. Dabei ist die Unterseite der Oberflächenvergütungsfolie entweder mit einer selbstklebenden Kleberformulierung beschichtet, mit einem Hotmelt oder mit einer Adhäsivschicht ausgerüstet. Diese Modifikation der Unterseite bindet bei einer temperatur- und druckunterstützten Applikation auf dem Endsubstratmaterial an.

Über die Materialeigenschaften der Oberflächenvergütungsfolie können auf diese Weise weitere Produktmerkmale, z. B. auch optischer Natur, realisiert werden. Außerdem ist ein solches Verfahren sehr flexibel, z. B. bei größeren zu beschichtenden Substraten, vor Ort ohne Handhabung von Lösungsmitteln oder hohen Temperaturen anwendbar.

In einer dritten, der zweiten Ausführungsform ähnlichen Variante, wird die Beschichtung in Form eines Thermotransfer-Prozesses der erfindungsgemäßen Beschichtungszusammensetzung auf das jeweilige Substratmaterial realisiert.

Hierbei wird ein entsprechendes Folien- oder Papier-Trägermaterial in einem ersten Beschichtungsschritt mit einer Releaseschicht ausgerüstet, welche einen ThermoTransfer der, in einem zweiten Beschichtungsschritt applizierten, erfinderischen Coatingformulierung auf das jeweilige Substratmaterial ermöglicht.

Optional kann hierbei, falls notwendig, in einem dritten Beschichtungsschritt eine Adhäsivschicht appliziert werden, welche eine sachgerechte Haftung des Thermotransfer-Schichtenaufbaus auf dem jeweiligen Substratmaterial gewährleistet.

Eine vierte Ausführungsform repräsentiert die Lösungsmittel-freie Pulverlackbeschichtung. Geeignete Verfahren und Ausführungsformen diesbezüglich sind dem Fachmann hinlänglich bekannt.

In einer weiteren Ausführungsform der vorliegenden Erfindung werden die erfindungsgemäßen Formulierungen zur Herstellung von Coil-Laminaten eingesetzt. Entsprechende Systeme und Ausführungsformen sind dem Fachmann grundsätzlich bekannt.

Die erfindungsgemäße Beschichtung kann anschließend optional mit einer oder mehreren weiteren funktionellen Schichten versehen werden. Dabei kann es sich beispielsweise um eine Kratzfestbeschichtung, eine leitfähige Schicht, eine Antisoiling-Beschichtung und/oder um eine reflektionserhöhende Schicht oder anderen optisch funktionelle Schichten handeln. Diese zusätzlichen Schichten können beispielsweise mittels Physical Vapour Deposition (PVD) oder Chemical Vapour Deposition (CVD) aufgebracht werden.

Eine zusätzliche Kratzfestbeschichtung kann optional zur weiteren Verbesserung der Kratzfestigkeit aufgetragen werden. Bei Kratzfestbeschichtungen kann es sich z. B. um Siliziumoxid-Schichten handeln, die direkt mittels PVD oder CVD aufgetragen werden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### Messmethoden:

### 1. Gelpermeationschromatographie

Das zahlenmittlere und das gewichtsmittlere Molekulargewicht der im Rahmen der vorliegenden Erfindung eingesetzten Block-Copolymere wird nach DIN 55672-1 mittels Gelpermeationschromatographie in Tetrahydrofuran als Eluent und Polystyrol zur Kalibrierung bestimmt. Die Polydispersität (U) = Mw/Mn.

### 2. OHZ

Die hergestellten Block-Copolymere besitzen Hydroxylgruppen als Endgruppen. Die Konzentration der OH-Gruppen wird nach DIN 53240-2 titrimetrisch in mgKOH / g Polymer bestimmt.

### 3. Zugscherfestigkeit

Die Elastizität und Flexibilität der erfindungsgemäßen Filme sowie die Klebeigenschaften der hergestellten Klebstoff-Formulierungen wird anhand der Zugscherfestigkeit nach DIN EN 1465 in N/mm² gemessen.

### Eingesetzte Rohstoffe:

- POLYVEST® HT: Hydroxyfunktionalisiertes Polybutadien (Fa. Evonik Resource Efficiency GmbH)
- DYNACOLL 7360: Hydroxyterminierter Polyester (Fa. Evonik Resource Efficiency GmbH)
- ε-Caprolacton (Fa. BASF SE)
- Isocyanatopropyltrimethoxysilan (IPMS - Fa. Evonik Resource Efficiency GmbH)

### Beispiel 1: Herstellung des erfindungsgemäßen Block-Copolymers

750 g POLYVEST® HT wurden mit 750 g ε-Caprolacton und 0,75g TYTAN TNBT unter Stickstoffstrom in einen 2 I Mehrhalskolben mit Rückflusskühler vermengt. Anschließend wurde die Mischung unter stetem Stickstoffstrom auf 160 °C für 6 Stunden erhitzt. Das daraus hergestellte Block-Copolymer wurde per GPC-Analyse auf vollständigen Umsatz untersucht und konnte anschließend ohne weitere Aufarbeitungen zur Herstellung des SFP verwendet werden.

### Beispiel 2: Herstellung der SFP durch Reaktion der Polyole mit Isocyanatopropyltrimethoxysilan

In einem 500 ml Planschliffkolben wurden 300g Polyol bei 130 °C für 45 Minuten im Vakuum (< 10 mbar) getrocknet. Danach wurde die Schmelze auf 80 °C abgekühlt und 0,03 g DBTL (0,01 Gew-% bezogen auf das Polyol) sowie die in Tabelle 1 angegebene Menge IPMS in einem molaren OH/NCO-Verhältnis von 1:1 zugegeben und für 45 Minuten bei 80 °C unter Stickstoff homogenisiert. Anschließend wurden 0,17 g DBTL als Aushärtungskatalysator zugegeben. Danach wurde der SFP abgefüllt.

### Beispiel 3: SFP-Eigenschaften

Aus den SFP 2a-c wurden Filme mit ca. 1 mm Schichtdicke hergestellt und bei 20 °C und 65 % rel. Luftfeuchtigkeit für die in Tabelle 1 angegebene Zeit gelagert sowie anschließend bzgl. Kohäsion und Elastizität analysiert. Ebenfalls wurden ausgewählte Substrate mit den SFP verklebt und nach 2 Wochen Lagerung bei 20 °C und 65 % rel. Luftfeuchtigkeit bzgl. der Zugscherfestigkeit analysiert.

**Tabelle 1: Einsatzmengen der zur SFP-Herstellung verwendeten Substanzen sowie Ergebnisse der Ausprüfung derSFP-Kenndaten**

| SFP | 2a (Vergleichsbeispiel) | 2b (Vergleichsbeispiel) | 2c (Erfindungsgemäß) |
|---|---|---|---|
| Verwendetes Polyol | DYNACOLL 7360 | POLYVEST HT | Beispiel 1 |
| OHZ Polyol | 30 | 45 | 25 |
| Einwaage Polyol | 300 g | 300 g | 300 g |
| Einwaage IPMS | 34,8 g | 54,6 g | 23,6 g |
| Filmeigenschaften nach 1 Woche Aushärtung | | | |
| Zugfestigkeit | 17 N/mm² | 0,4 N/mm² | 5 N/mm² |
| Elongation at Break | 8% | 17% | 27% |
| Filmeigenschaften nach 2 Wochen Aushärtung | | | |
| Zugfestigkeit | 19 N/mm² | 1 N/mm² | 6 N/mm² |
| Elongation at Break | 9% | 21% | 27% |
| Klebeigenschaften (Zugscherfestigkeit nach DIN EN 1465) nach 2 Wochen Aushärtung | | | |
| PVC | 5,2 N/mm² | 0,8 N/mm² | 5,1 N/mm² |
| Stahl sauber | 2,4 N/mm² | 0,3 N/mm² | 3,1 N/mm² |
| Stahl ölig* | < 0,3 N/mm² | 0,3 N/mm² | 2,8 N/mm² |

| | | | |
|---|---|---|---|
| *Das Stahl wurde kontrolliert kontaminiert. Hierzu wurde das Substrat zunächst mit Aceton gereinigt und dann mit Hilfe eines Handtuchpapiers als Beispielsubstanz das Schmieröl für Vakuumpumpen N62 (Fa. Leybold) aufgetragen. Es ergab sich, dass auf eine Fläche von 15,3 x 10,0 cm eine Ölmenge von 0,0384 g aufgetragen wurde, das ergibt ca. 2,5 g/m². Vor dem Ölauftrag wurde der Stahl auf 65 °C erwärmt. | | | |

Die erhaltenen Werte in Tabelle 1 zeigen deutlich, dass die erfindungsgemäßen SFP basierend auf Block-Copolymeren im Vergleich zu reinen Polyester-basierten Systemen eine verbesserte Elastizität haben, gleichzeitig jedoch im Vergleich zu reinen Polyolefin-basierten SFP eine bessere Kohäsion und deutlich verbesserte Klebeigenschaften auf polaren Substraten wie PVC oder Metall aufweisen.

## Patentansprüche

1. Polymer enthaltend eine oder mehrere Polyester- und eine oder mehrere Polyolefin-Struktureinheiten, **dadurch gekennzeichnet, dass** das Polymer mindestens eine Struktureinheit der Formel (I) 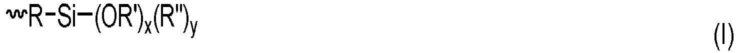 aufweist, mit R, R' und R" gleiche oder verschiedene, gesättigte Kohlenwasserstoffreste, vorzugsweise lineare Kohlenwasserstoffreste, bevorzugt mit 1 bis 3 Kohlenstoffatomen, und x = 0 bis 3, y = 0 bis 3, mit der Maßgabe, dass x + y = 3 ist, und wobei die geschwungene Linie eine kovalenten Bindung zum Polymer darstellt.

2. Polymer gemäß Anspruch 1, **dadurch gekennzeichnet, dass** das Polymer der Formel (II) 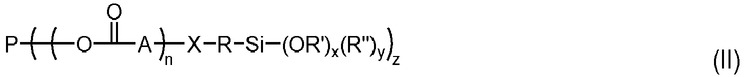 genügt, mit
P = Polyolefinstruktureinheit,
A = gleiche oder verschiedene Kohlenwasserstoffreste, bevorzugt -C₅H₁₀- und/oder-C(CH₃)H-Rest,
X = Linker, der mindestens eine -N-C(O)-O- Gruppe aufweist,
z >= 1 und
n von 2 bis 500 ist.

3. Polymer nach Anspruch 2, **dadurch gekennzeichnet, dass** der Linker X die Formel (IIa), (IIb), (IIc), (IId) und/oder (IIe) aufweist, 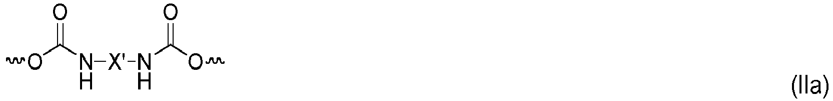 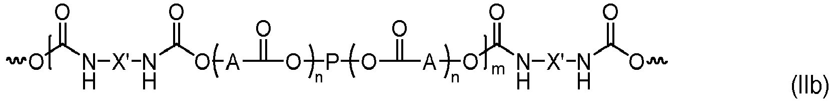 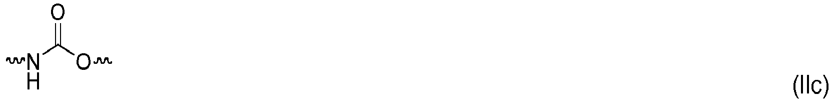 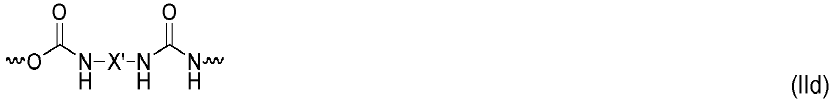 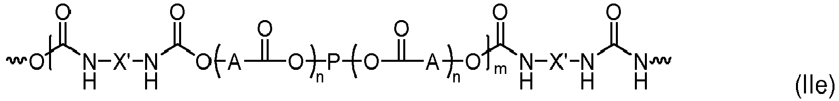 mit X' = Kohlenwasserstoffrest, vorzugsweise 1,1,3,3-tetramethylcyclohexanrest, Toluolrest oder Methylen-1,1'-Dibenzolrest und A wie oben definiert, n = 2 bis 500, m = 1 bis 10, und wobei die geschwungenen Linien eine kovalenten Bindung zu den benachbarten Atomen darstellen.

4. Polymer nach mindestens einem der Ansprüche 1 bis 3, **dadurch gekennzeichnet, dass** mindestens eine Polyolefinstruktureinheit auf einem OH-funktionellen Polyolefin, vorzugsweise OH-funktionellem Polybutadien basiert.

5. Polymer nach einem der vorangegangenen Ansprüche, **dadurch gekennzeichnet, dass** mindestens eine Polyesterstruktureinheit auf ε-Caprolacton und zusätzlich gegebenenfalls Lactid basiert.

6. Polymer nach einem der vorangegangenen Ansprüche, **dadurch gekennzeichnet, dass** R ein linearer Kohlenwasserstoffrest -CₖH₂ₖ- mit k = 1 bis 3, bevorzugt k = 1 oder 3, besonders bevorzugt k = 3 ist.

7. Polymer nach einem der vorangegangenen Ansprüche, **dadurch gekennzeichnet, dass** x => 2 ist.

8. Polymer nach einem der vorangegangenen Ansprüche, **dadurch gekennzeichnet, dass** z => 2 ist.

9. Verfahren zur Herstellung eines Silan-funktionalisierten Polymers, **dadurch gekennzeichnet, dass** das Umsetzungsprodukt eines Block-Copolymers auf Basis von OH-funktionellem Polyolefin, welches auch anteilig oder vollständig hydriert vorliegen kann, vorzugsweise aber unhydriert ist, bevorzugt OH-funktionellem Polybutadien, und zyklischen Estern als Polyol, welches mindestens 1,8 OH-Gruppen aufweist, direkt oder nach einem Zwischenschritt mit mindestens einer organischen Silanverbindung umgesetzt wird.

10. Verfahren nach Anspruch 9, **dadurch gekennzeichnet, dass** als Silanverbindung ein Isocyanat-funktionelles Silan eingesetzt wird.

11. Verfahren nach Anspruch 9, **dadurch gekennzeichnet, dass** das Polyol mit einem Polyisocyanat, vorzugsweise Diisocyanat umgesetzt wird, welches anschließend mit einem Aminosilan umgesetzt wird.

12. Verfahren nach einem der Ansprüche 9 bis 11, **dadurch gekennzeichnet, dass** ein Polymer gemäß einem der Ansprüche 1 bis 8 hergestellt wird.

13. Verwendung von Polymeren nach einem der Ansprüche 1 bis 8 oder erhältlich nach einem Verfahren gemäß einem der Ansprüche 9 bis 12 zur Herstellung von Klebstoffen, Dichtstoffen oder Beschichtungen.

14. Kleb- und Dichtstoffe sowie Beschichtungszusammensetzungen enthaltend Polymere nach einem der Ansprüche 1 bis 8 oder erhältlich nach einem Verfahren gemäß einem der Ansprüche 9 bis 12.

15. Verwendung der Kleb- und Dichtstoffe gemäß Anspruch 14 zur Verklebung von Substraten, vorzugsweise öligen Substraten.
